# EUROPEAN PATENT APPLICATION

(11) **EP 0 656 444 A1**
(43) Date of publication of application: **07.06.1995**
(21) Application number: 94308267.7
(22) Date of filing: 09.11.1994
(51) Int. Cl.: D21J 7/00

(54) **Process for making pulp mouldings**

(30) Priority: 09.11.1993 GB 9323036; 09.11.1993 GB 9323037; 22.12.1993 GB 9326152; 11.05.1994 GB 9409386
(71) Applicant: Bowater plc, London SW1X 7NN (GB)
(72) Inventor: Cook, John Edward, Harrogate, North Yorkshire HG2 0AZ (GB); Williams, Colin, Bury St. Edmunds, Suffolk IP33 2RB (GB); Shepheard, Paul, March, Cambridgeshire PE15 8NH (GB)
(74) Representative: Wain, Christopher Paul

(57) **Abstract**

A pulp moulding is made by supporting mesh (22) on a shaped support (20) made by or from laminated object manufacture. The support (20) is provided with drainage channels (21) through which water is drawn to deposit pulp (24,25) on the mesh (22). The mesh may be ordinary wire mesh, or may be made by stereolithography.

## Description

This invention relates to a process for making pulp mouldings.

It is known to mould articles from paper pulp and the like. For example, egg cartons and other packaging items are commonly made in this way. In recent times, there has been a move to replace conventional expanded polystyrene and other plastics packaging items by corresponding pulp products, both to achieve economies and for ecological reasons. However, current manufacturing techniques for pulp products, whilst perfectly satisfactory for fairly crude items such as egg boxes, do not easily permit the production of more sophisticated items.

In general, pulp products are made by providing a mesh mould, feeding an aqueous pulp to one side of the mould, and applying a vacuum to the other side of the mould to draw water through the mesh, thus leaving the solids (fibres) deposited on the mesh. The wet moulded solids are then removed and dried to form the moulded product. The mesh moulds for these processes are largely hand-made and, especially for complex shapes, can take a long time to make. In one typical procedure, individual pieces of wire mesh are shaped and located on a support member, and joined to adjacent pieces to build up a complete mould.

It will be appreciated that it is very difficult by these conventional procedures to make anything but relatively simple moulded products. Furthermore, it is difficult if not impossible to make very accurately dimensioned and shaped products. These limitations of the production process result in severe limitations on the sort of products which can be made by this technique.

We have now devised an improved way of manufacturing moulded pulp products by which much greater control can be exercised over the mould production, and whereby much more sophisticated products of much wider variety can be made.

According to the present invention, there is provided a process for making a pulp moulding which comprises feeding an aqueous pulp to one side of a mesh mould, and reducing pressure on the other side of the mould to draw water through the mould, to form the pulp moulding on said one side of the mould; characterised in that the mould includes a shaped member made or derived by laminated object manufacture (LOM).

Laminated object manufacture (usually abbreviated to LOM) is a process in which a shaped object is built up of layers of plastic coated paper, each individually cut by a laser and adhered to adjacent layers. The laser is computer controlled and the technique allows complex three-dimensional articles to be produced with high accuracy. The technique is known and uses a layer of plastic-coated paper which becomes fused to an underlying layer, the upper layer then being cut by laser. A further layer of paper is then fused thereover, and the process repeated until a laminar block has been built up. The block as formed contains both the laminated shape which is required, and also the other waste regions of each paper layer which are not required. These other regions are then carefully peeled away to leave the desired laminated shape.

LOM enables complex shapes to be made with high accuracy, and the invention uses articles made in this way to form moulds for pulp moulding. The LOM shapes can be used as such, but we prefer to take a casting therefrom in plastics material and to use the plastics member as the shaped member for the pulp moulding process.

It is usually necessary to provide a series of channels in the shaped member to conduct the water away. These channels, usually through-holes, can be formed in various ways. For example, they can be formed during the LOM process, i.e. the holes can be cut in each layer of plastic coated paper as the laminae are built up. Alternatively, the LOM article can be made in solid form and the holes formed in it thereafter. Where a plastics moulding of the LOM shape is made, if the shape is solid then holes can be made in the solid moulding.

In one aspect of the present invention, the LOM shaped member is used to support a mesh member. Thus, for example, the conventionally used wire mesh can be supported on the LOM member. In one preferred embodiment, the LOM shaped member is cast in plastics material, and then a series of the through-holes or channels as described above are formed therein. The purpose of these is to conduct away the water which passes through the mesh. In accordance with a feature of the invention, a regular array of relatively large holes can be formed in the plastics member. If it is desired to make a pulp moulding of varying thickness, the holes in the plastics support can be closed or restricted in these areas corresponding to where the thinner pulp moulding is required. In this way, in these areas less water is drawn through the mesh, so resulting in a smaller thickness of pulp on the mesh. In contrast, in areas where the through-holes are of full bore, more water is drawn through the mesh, resulting in a greater thickness of pulp on the mesh. In this way, pulp mouldings of varying thickness can be made.

Instead of forming the through-holes in a regular array and then closing or restricting some to cause a variation in moulding thickness, the through-holes can be formed ab initio in an irregular spacing and/or of varying sizes in order to provide the varying water flow which results in variations in thickness of the pulp laid down on the mesh.

The through-holes or channels for the water flow can be cut in the plastics member by any suitable means. We prefer to use a laser but other techniques can be utilised.

When it is desired to make a pulp moulding of varying thickness, i.e. with thicker and thinner areas, using a mesh on an LOM support with through-holes as described above, it is important that the mesh can be in intimate contact with the support to avoid lateral flow between the mesh and the support surface. This is not always wholly practicable, and where there are problems we prefer to use an alternative procedure to obtain varying thickness products.

According to a first of these procedures, the mesh is formed by sterolithography (SLA). In the SLA process, an article is built up of polymerised resin in a bath of UV-sensitive unpolymerised resin, by directing laser energy into the bath to cause polymerisation at points in the resin and so build up a polymerised structure. The technique is complex and the laser is computer-controlled. The manufacture of mesh-like structures by this process is believed to be novel.

The mesh-like structures made by SLA are composed of polymerised resin, eg. an acrylic resin. For convenience, a mesh mould for a pulp product will normally be made up of a plurality of mesh units, at least some of which being made by the SLA process. Each unit will be mounted on the LOM support to form the mould. The units can be made of an exact size and shape to be mountable on a predetermined LOM support to provide the exact shape required to avoid any gaps between the mesh and the support.

For some purposes, the polymerised acrylic mesh units as directly made by SLA can be utilised as such to make a mould. We prefer. however, to make copies of the SLA-generated units in, for example, other plastics materials, metals or ceramics. These second generation mesh units can have a longer life or have other advantageous characteristics over the SLA-generated units. The accuracy of the SLA-generated units can be maintained in the second generation units which can be made by procedures well known in the art.

A second alternative procedure is to make the mesh of varying mesh aperture thereby varying the water flow rate through the mesh resulting in a varying thickness of the pulp. One excellent way of providing such a mesh is by SLA, by which it is easily possible to control the mesh aperture and to provide local variations as desired. This is an important feature of the present invention.

According to one preferred feature of the LOM technique as used in this invention, a relatively thick paper (eg. 8 to 12 thousandths inch thickness) can advantageously be used. In this way, a stepped surface can be obtained so that, when mesh is supported thereon, lateral liquid flow paths are obtained which is advantageous when constant thickness pulp products are required or when a mesh of varying aperture is used.

One problem which can arise in making shaped members by LOM, is that the low bond strength between the laminae of the articles can result in the article having inadequate structural rigidity. According to a further aspect of this invention, we have found that this problem can be overcome by impregnating the LOM-generated shaped article with a resin to strengthen it. The resin not only provide structural reinforcement, but can also of course provide other properties such as heat resistance and/or water resistance.

In the known process for making articles by the LOM technique, the paper used has a continuous plastics coating to ensure overall adhesion to adjacent laminae in the product. We have found, however, that such coatings can form relatively impervious barriers against passage of impregnant resin in the article. Thus, the resin can be essentially restricted to individual laminae and not significantly bridge between adjacent laminae. We have found, according to a preferred feature of this invention, that this problem can be overcome by using plastic coated paper where the coating, or the paper itself, is discontinuous in order to provide inter-laminae porosity in the LOM-generated article. This enables the impregnant resin to form a three-dimensional integral structure throughout the article, providing great strength if desired.

The paper can be made discontinuous by, for example, providing holes therein. The plastic coating can be made discontinuous by, for example, printing it onto the paper in a suitable pattern or by spraying it onto the paper without providing a continuous coating. The size of the holes or other discontinuities will usually be small so as not to affect significantly the inter-lamina bonding. The optimum arrangement can be found in any particular case by routine trial and experiment.

In accordance with a further aspect of the present invention, we have found that, instead of using paper or paper-like materials, in the LOM process, shaped articles can be built up from other sheet materials which can be suitably coated or impregnated with plastics material to provide the required bonding. Examples of such non-paper materials include plastics films, metal foils, woven and non-woven materials and ceramics. The plastics materials can be natural or synthetic, thermoplastic or thermosetting resins, depending on the physical and chemical properties required in the shaped article.

These materials will be coated (like the paper feedstock) and suitable coating materials to provide the necessary inter-lamina adhesion include low and high density polyethylene, polyurethanes, acrylics, phenolics, polyesters and casein, for example.

As will be clear to those skilled in the art, it may not always be necessary to provide an adhesive coating: sometimes, for example, surface treatment of a plastics sheet can provide the required bonding property.

The thickness of the paper, foil, ceramic, woven or non-woven materials will depend on the material itself and on the cutting power of the laser. Usually, they will have a thickness of about 0.05 to 1.0mm.

Shaped members made from porous sheet materials can be impregnated to strengthen them as described herein for the paper-based articles. Articles made from non-porous sheet materials are preferably made porous by first providing some porosity in the sheets themselves (and, if required, in any adhesive layer thereon). This can be achieved as previously described by providing holes in the sheets and/or discontinuities in any plastics coating (adhesive) applied thereto.

In the case of sheet materials which are essentially non-porous per se, e.g. metal foils or some plastics films, it is advantageous to provide discontinuities therein in a regular pattern on each sheet and to lay up the sheets in the laminate with the discontinuities directly super-posed to provide porosity throughout the article. This then enables any impregnant resin to permeate the article to provide the required structural integrity.

Impregnation of the articles of the invention is usually effected with a thermoplastic or thermosetting resin. Because of their three-dimensional porosity, as a result of resin impregnation, they can be made very strong. Furthermore, by judicious selection of the impregnating resin, other properties can be conferred. For the manufacture of certain moulds in particular, high heat transfer can be a desirable characteristic and this can be achieved by using an impregnating resin of good thermal transfer characteristics.

Impregnation of the shaped articles of the invention can be effected under vacuum and/or by immersion or spraying.

Because of the ability which the present invention provides to closely control the mesh mould surface, the quality of the surface can be chosen to requirements from, for example, very smooth to a roughened appearance. In accordance with another preferred feature of the invention, both surfaces of a moulded article can be made smooth by positioning a smooth male member in the pulp adjacent the mesh surface. This member itself could comprise a mesh surface with vacuum applied thereto if desired. The member can be used to transfer the pulp moulding to the oven for drying.

Laminated paper articles produced by LOM will normally be resin treated to impart the desired chemical, water, heat and wear resistance.

The present invention enables a very wide variety of pulp mouldings to be made, in particular mouldings of articles which it has not been possible previously to produce in pulp. Further, because of the accuracy and control available, articles can now be made as pulp mouldings which would not previously have been considered as possible.

In order that the invention may be more fully understood, reference is made to the accompanying drawings, wherein:
Fig. 1 schematically illustrates one embodiment of the technique of LOM;
Fig. 2 is a vertical section through parts of a shaped article as it is made by LOM.
Fig. 3A is a schematic vertical section through part of a prior art LOM article;
Fig. 3B is a schematic vertical section through part of an LOM shaped article made by the process of the present invention;
Fig. 4 is a schematic vertical section through part of another LOM shaped article;
Fig. 5 schematically illustrates the technique of SLA;
Fig. 6 show schematically and in vertical section the production of an article by SLA;
Fig. 7 is a top plan view of one embodiment of a mesh unit made in accordance with the invention;
Fig. 7B is a sectional elevation on the line B-B of Fig. 3A;
Fig. 8 shows a section of a mesh support of the invention with mesh thereon;
Fig. 9 illustrates schematically a pulp moulding process;
Fig. 10 illustrates schematically the overall process from making the mould through to making the pulp moulding;
Fig. 11 illustrates the formation of a pulp moulding of varying thickness; and
Figs. 12A,12B and 12C together illustrate formation of a pulp moulding with weakened areas for a press-out section.

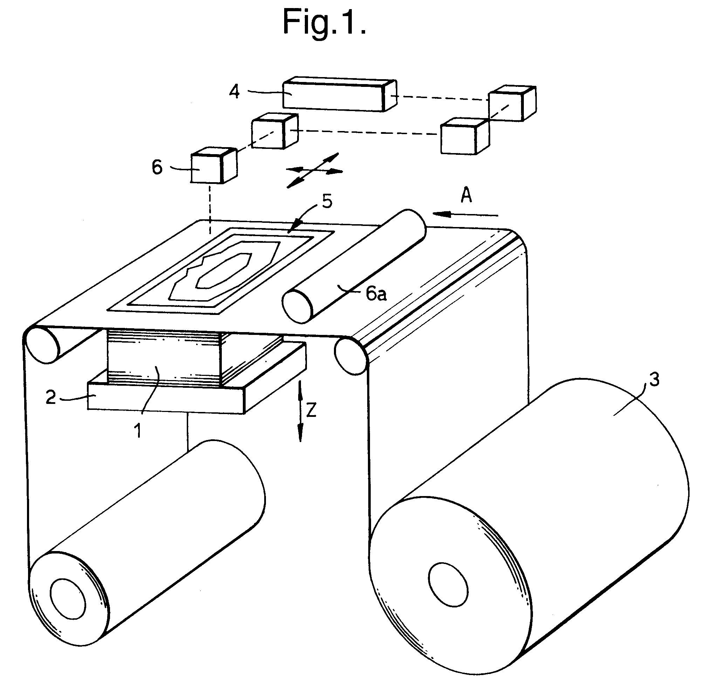

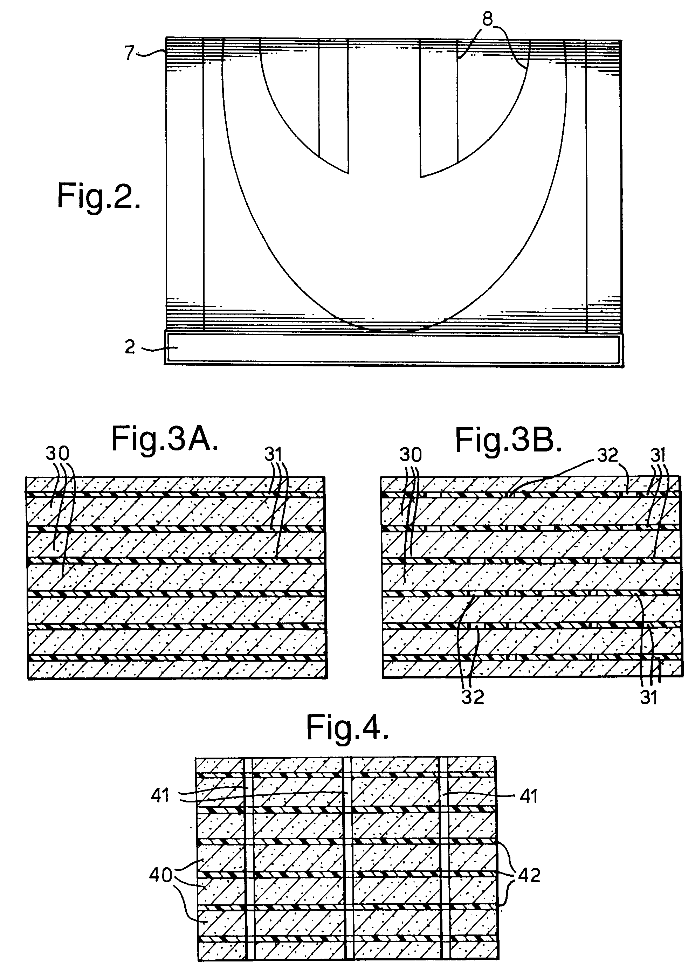

Referring to the drawings, Figs 1 and 2 illustrate the technique of LOM. Essentially, the technique involves exposing a sheet of plastic coated paper to a laser beam at selected points, whereby the paper is weakened at those points in accordance with a desired shape. A second sheet is then superposed on the first, the sheets are bonded by heat and the laser cutting process repeated. As successive sheets are treated in the same way, there is built up a stack of laminated sheets with weak area contours so that, finally, the weakened areas can be removed to obtain the desired article.

Fig. 1 shows the process in operation. The laminated stack 1 is supported on a platform 2 which is incrementally moved downwards as each new sheet of plastic coated paper is added to the stack. Each sheet is cut (also by the laser) from a continuous roll 3 which is moved in the direction of arrow A over the stack. The laser apparatus 4 is arranged to scan the working area 5 by use of movable mirrors 6 etc. controlled by computer. A heated roller 6a is moved over each new sheet to bond it to the underlying stack.

Fig. 2 shows the individual sheets 7 in the stack 1 with lines 8 of weakness built up by the laser.

Referring now to Figs. 3A and 3B, the shaped article comprises a plurality of porous laminae 30 (e.g. paper), bonded together with plastics layers 31. In the known construction of Fig. 3A, the plastic coatings are continuous and each lamina 30 is effectively sealed from adjacent laminae. In the result, the structure is porous only in the plane of individual laminae.

In Fig. 3B, however, the plastics layers 31 are discontinuous (as at 32), so that there is communication between adjacent laminae. Upon impregnation with a resin, the resin can permeate the whole structure effectively joining laminae together to make a very strong product.

Fig. 4 illustrates an article of the invention in which a non-porous material is used to make the laminae 40. The material is coated with an adhesive coating 42 and then perforated in a regular pattern, and the laminae 40 are then laid up with the perforations 41 on each lamina 40 coincident. The resulting product has inter-laminae porosity by virtue of the perforations 41.

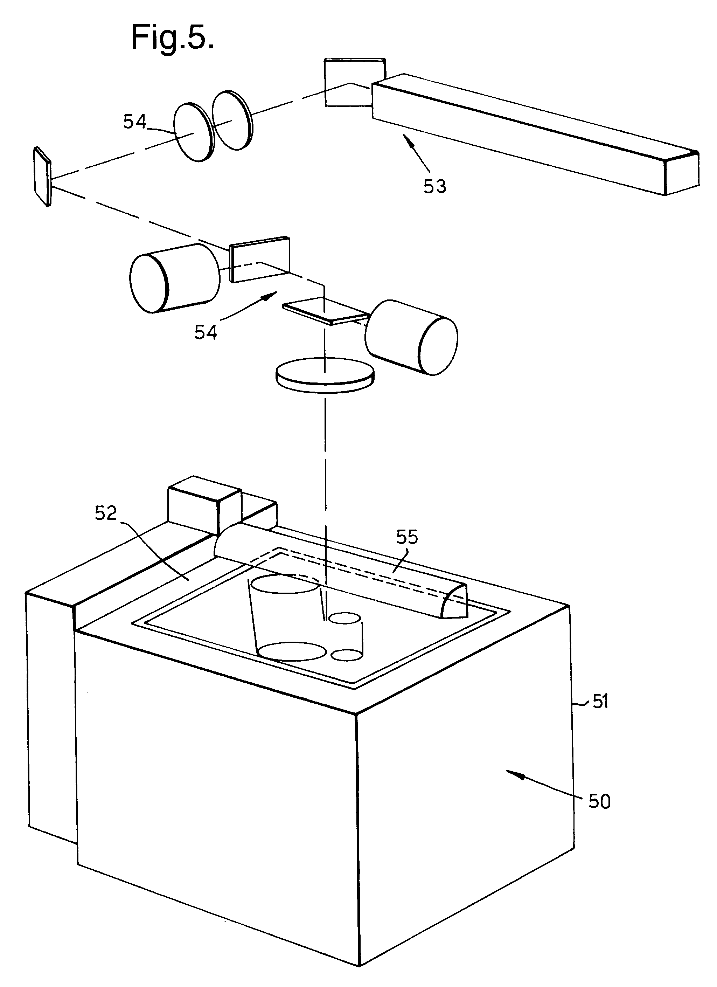

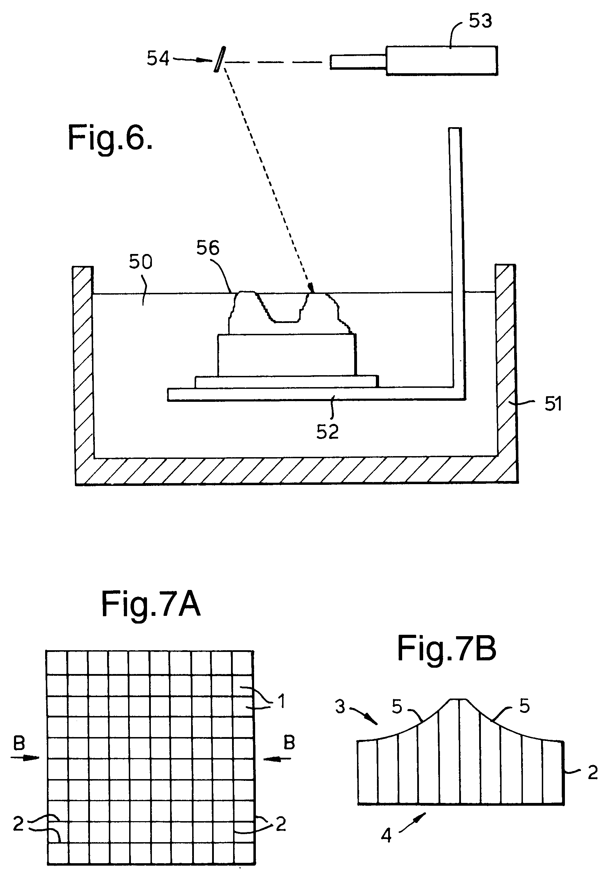

Referring to Figs. 5 and 6, UV sensitive resin 50 is in a tank 51 in which is mounted a table 52 which is vertically reciprocable. A laser beam is spot focussed in a horizontal plane in the liquid surface of the tank, and is arranged to move to traverse the whole area of the plane. The speed of movement of the beam is varied to cause polymerisation of the resin only in the desired areas of the plane. (Alternatively, the beam could be pulsed.) The plane is very thin.

After one plane has been treated, the table is moved downwards by an increment to bring fresh liquid into the plane of focus of the laser. A wiper 55 is used to level the liquid surface. The beam is again caused to traverse the plane. As the process is repeated, plane by plane, there is built up a structure 56 of polymerised resin. In accordance with the present invention, the structure is of a three-dimensional mesh. Fig. 6 shows a structure ("model") being built up.

Figs. 7A and 7B illustrate a mesh unit made by the SLA technique in accordance with the invention. The unit illustrated comprises a grid of 10 x 10 through-channels (1) each bounded by thin walls (2). The unit has a top (3) and bottom (4), the apertures (1) extending from top to bottom of the unit. The top (3) is shaped (i.e. the tops of the walls defining the channels are shaped) to the shape of the desired moulded article (see curves (5) in Fig. 3B). In use, units are mounted on a support and a vacuum applied at the bottom (4). Pulp is fed to the top (3) and liquid is drawn off through channels (1), leaving the solids residue on the shaped top (3).

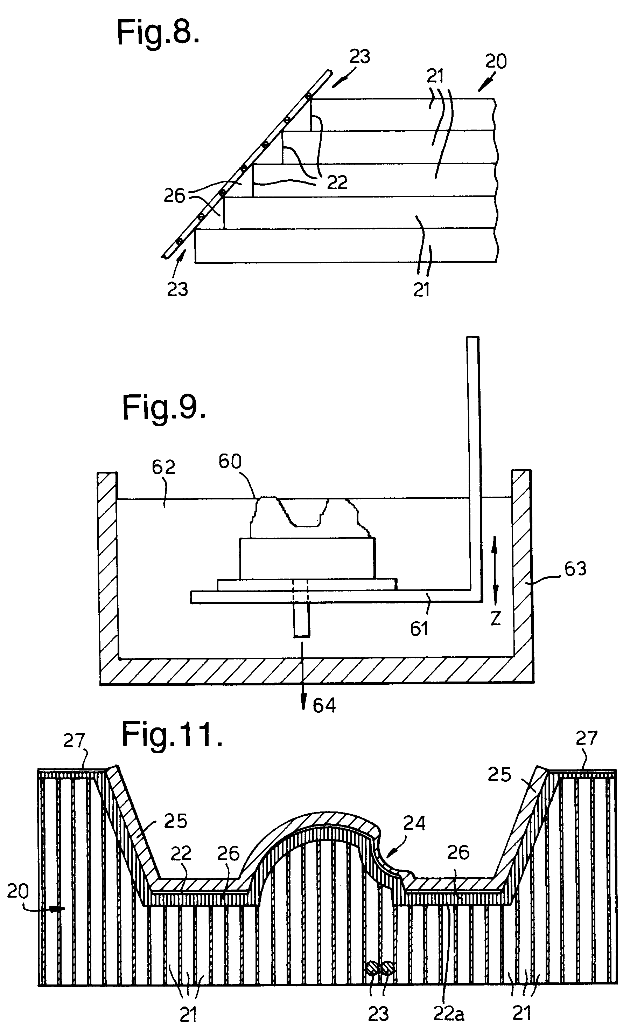

Fig. 8 shows, in vertical section, an edge region of an LOM-generated support 20 comprising individual sheets 21 bonded together. Each sheet has been cut at its end 22 by the laser, to provide the desired shaped surface 23 of the support. The surface is, however, made up of a series of steps, each corresponding to the thickness of the end 22 of the respective sheet. A mesh 25 is laid on surface 23, and the steps provide lateral flow passages 26 between the mesh and the end surfaces of the sheets. These passages 26 can greatly assist in fluid flow during a pulp moulding process.

Fig. 9 schematically illustrates a pulp moulding process. The mould 60 comprising a support with mesh units mounted thereon is located on an elevator platform 61 for movement into and out of a pulp 62 in bath 63. The mould 60 communicates with a vacuum source and a liquid drain 64 permits water drawn through the mesh to escape. When the desired thickness of solids has built up on the mesh mould, the moulded article is removed for oven drying.

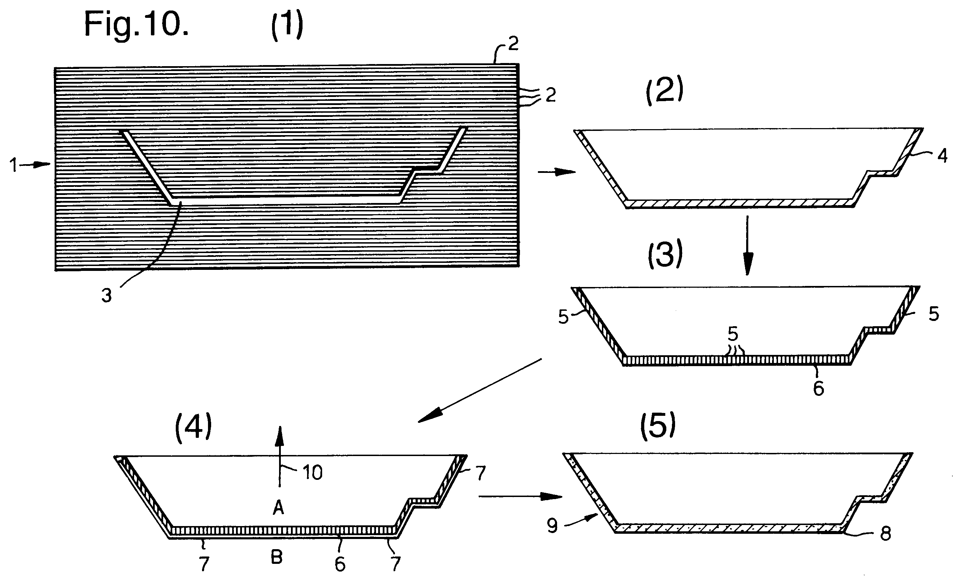

Referring now to Fig. 10, there is shown schematically an embodiment of the overall process from making the LOM mould to production of the pulp moulding. Fig. 10 illustrates five stages in the process. In stage (1), the LOM mould 1 is produced from plastic-coated paper laminae 2, with the particular shape of the mould 3 therein. From this, there is made a solid casting 4 (stage 2) in the shape of mould 3. This solid casting 4 is made of plastics material or metal, for example. It is to serve as the support for mesh. Firstly, however, it has the drainage holes or channels 5 formed therein. As illustrated (stage 3), these channels 5 are all vertical and parallel, but they need not be in this form.

In stage (4), the lower (as illustrated) face 6 of the casting 4 is covered with mesh 7. Usually this will be wire mesh but it may be one of the alternatives described herein (eg. an SLA mesh). As can be seen, the mesh 7 lies in contact with the surface 6 of the casting 4.

The next step in the process is to apply a reduced pressure to side A of casting 4 whilst supplying aqueous pulp to side B. The water in the pulp is drawn through mesh 7 and drainage holes 5, in the direction of the arrow 10, to deposit a layer 8 of pulp on the mesh 7. When a sufficient thickness of the pulp layer 8 has built up, the process is stopped and the pulp moulding 9 so formed is removed from the mesh and dried. Pulp moulding 9 is shown on stage (5).

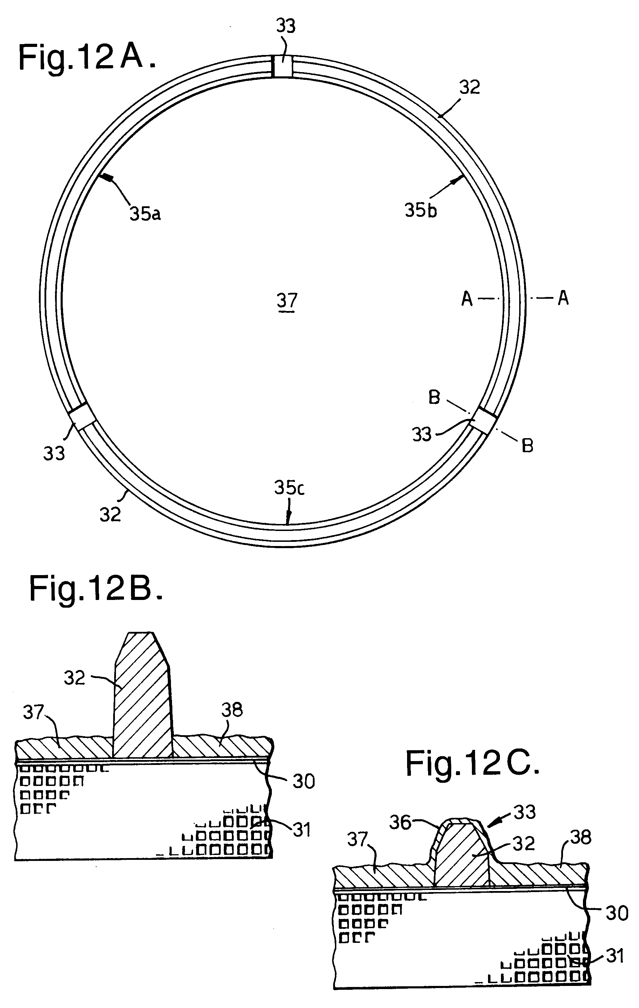

Fig. 11 illustrates a process according to the present invention, in which a pulp moulding of varying thickness is made. An LOM support is made and a casting 20 made therefrom (as described with reference to Fig. 10). Drainage holes 21 are formed therein, and a mesh 22 is placed on the support. The mesh lies snugly on the upper profiled surface 22a of the LOM casting 20. Aqueous pulp is supplied over the mesh 22 and a reduced pressure applied below the casting 20 to draw water from the pulp through the mesh 22 and the drainage holes 21.

As shown, some of the drainage holes are blocked 23 to prevent water flow therethrough. The result of this is that a much thinner layer 24 of pulp is laid down on the mesh 22 above these blocked drainage holes. Elsewhere, where the mesh lies over open drainage holes, the pulp layer 25 formed is thicker.

In Fig. 11, the mesh 22 is an SLA-formed of plastics material with a plurality of fine holes 26 therein. This SLA unit fits snugly on the LOM casting 20 to substantially eliminate lateral water flow in the region between the mesh 22 and the upper surface of the LOM casting 20. Blanking sheets 27 can be provided at each side on the LOM casting 20 to prevent lay down of pulp.

Fig. 12A is a top plan view of a mesh 30 on an LOM support 31 (see also Figs. 12B and 12C). The LOM support has water channels therein as previously described. Lying on the mesh 30 is ring 32 with three cut-out portions 33. As can be seen from Fig. 12B (which is a section on line A-A of Fig. 12A), ring 32 is upstanding by an amount greater than the depth of the aqueous pulp during formation of the pulp moulding, and the ring produces a discontinuity or slot in the moulding. The slot is in three arcs 35a, 35b, 35c. Between the arcs are the cut out portions of ring 32, where (see Fig. 12C which is a section on line B-B of Fig. 12A) the height of the ring is much reduced. In these regions, a thin layer 36 of pulp forms over the ring and these layers 36 formed weakened strips joining the pulp moulding 37 within ring 32 with the moulding 38 outside ring 32. In the result, moulding 37 can be easily released from moulding 38 when desired by simply breaking the three thin layers 36.

One aspect of the present invention is the use of LOM for making a mesh support member. As previously described, the mesh can be generated by SLA or it may be conventional wire mesh.

According to a further aspect of the invention, the mesh can be formed in other ways. For example, the "mesh" can be constituted by a sheet-like material with apertures therein. The apertures can be provided in any desired way, but according to a preferred feature of the invention the apertures are cut or drilled in the sheet-like material by laser.

There are various ways in which such a "mesh" can be provided on an LOM support. According to one preferred procedure, a thin sheet of plastic can be laid over an LOM support (preferably vacuum formed thereover) and then the sheet can be perforated with a laser to form fine mesh holes, for example about 1.0 mm diameter at 1.1 mm centres. The hole size and spacing can of course vary widely, as desired. Alternatively, the sheet could be perforated first and then applied to the LOM support. When the sheet is perforated on the support, the LOM laser can be used to make the perforations.

The concept of using a perforated sheet, especially (but not only) a perforated plastics sheet, to serve as a mesh, is itself novel and constitutes a further aspect of the invention. This aspect of the invention is useful particularly (but not exclusively) for making moulds for pulp moulding. The support is made by LOM, and the perforated sheet would have to be made to conform to the surface shape of the LOM (or other) support. It is thus preferred to shape the sheet on the support first before drilling the holes. Alternatively, a pre-drilled flat sheet could be formed to the support shape, eg. with a male or female tool, and then laid on the support.

There are various ways in which the invention as described hereinabove can be modified.

Firstly, whilst we have described aspects of the invention with reference to stereolithography (SLA), it is to be understood that there are other similar techniques which could be used instead. Examples include wax processes which build up layers of wax and/or cure with light; welding and cutting type processes which build up the profile by layering and/or welding; printing type operations which can build up the profile by addition and/or subtraction of materials. The processes are generally in one of two categories, i.e. the addition of material (SLA type process) or subtraction of material (LOM type process).

The mesh structures made by SLA can be made in the form of a body such as shown in Figs. 7A and 7B of the accompanying drawings, or they can be made as thinner structures (e.g. from 1 to 10mm thick) to be supported such as on LOM produced supports or otherwise.

In the body shown in Figs. 7A and 7B, the apertures (1) extend uniformly from the top (3) to the bottom (4) of the unit. We have now found that there are advantages in having the apertures taper or narrow from bottom to top. Thus, for example, there can be a top layer about 2mm thick having holes 0.75 x 0.75mm in size, then a layer 10mm thick having holes of size 1.5 x 1.5mm, then a layer with holes 3 x 3mm in size, and finally a bottom layer with holes 6 x 6mm in size. Thus, the top layer with fine holes is supported by the lower layers with larger holes, so effecting a saving in the amount of material used to make the unit.

The invention thus includes a mesh unit in which the size of the mesh bores varies with their length. Such units can be made by SLA and other similar techniques. In use of these units for making pulp mouldings, control over the moulding thickness can be achieved by selective blocking or constricting of the larger lower regions of the holes. In this way, experiments can be conducted very simply and efficiently to test various mesh conditions in order to achieve exactly the desired properties in the pulp moulding. This is a highly advantageous technique.

It will be understood that whilst we prefer to have the holes widen from top to bottom of the mesh unit, more complex arrangements of varying hole size etc. can be achieved as desired by the SLA technique (and similar techniques).

The mesh size at the surface of the mesh unit affects the surface finish of the pulp mouldings made using it. Because of the flexibility of SLA (and similar techniques), mesh size can be varied relatively easily, thus allowing a desired surface finish to be achieved. This is not possible by conventional techniques.

Instead of using laminated object manufacture (LOM) to make the shaped articles, where layers of plasticcoated paper (or the like) are individually cut by laser and then laminated together, it is possible to use other similar layer manufacturing techniques to make shaped articles. Examples of such other techniques include the wax processes and others described above as usable in place of SLA, and also any system which uses heat, light radiation to cure materials for subtraction and/or addition.

As described herein, shaped articles made by LOM are very advantageously used to support mesh (whether conventional wire mesh, or SLA-generated mesh, or any other mesh) for use in making moulded pulp articles. The LOM support is formed with suction holes therein, and the mesh is mounted on a surface over the holes, so that water can be drawn from the pulp, through the mesh and out of the LOM support suction holes.

One of the important desiderata in making more sophisticated pulp mouldings, is to be able to vary the moulding thickness so as to produce thinner (weaker) or thicker (stronger) areas, for example. By conventional techniques, this is very difficult to achieve. As described above, we have found that there is a way of achieving this which is relatively simple and highly effective. In particular, we have found that, without changing the mesh, by varying the suction holes in the support, control of the thickness of the pulp moulding can be achieved. Using the LOM (or a similar technique), it is possible to produce supports with various different suction hole arrangements, i.e. different spacings, different sizes, different shapes (e.g. different cross-sectional shapes) etc. It is also possible then to experiment by varying the liquid flow allowed in various suction holes, such as by temporarily occluding them, until exactly the right wall thickness is achieved in the pulp moulding. This possibility gives enormous advantages in practice.

We have referred herein to the use of paper pulps but other mouldable pulps and the like can also be used. For example, any fibre or particulate in a suspension medium, wet or dry, can be used. A microfine glass suspension is an example of a wet suspension. Dry suspensions include spray type applications to a mesh surface which employs suction through it.

In the manufacture of pulp mouldings, the wet moulding has to be removed from the mould and stored to dry. There are sometimes problems in removing the wet moulding and transferring it to the drying station. We have found a way of dealing with this problem. According to the present invention, we smooth the surface of the pulp moulding whilst it is still on the wet mould, apply a release agent thereto (e.g. petroleum jelly) and then spray fibre glass/resin on to it to form a transfer mould. The transfer mould also has the usual vacuum line/air line.

## Claims

1. A process for making a pulp moulding which comprises feeding an aqueous pulp to one side of a mesh mould, and reducing pressure on the other side of the mould to draw water through the mould, to form the pulp moulding on said one side of the mould; characterised in that the mould includes a shaped member made or derived by laminated object manufacture (LOM).

2. A method according to claim 1, wherein the shaped member is a plastics material mould derived from an LOM article.

3. A method according to claim 2, wherein the plastics mould comprises a shaped moulding surface and a series of water-conducting channels in the mould to conduct water from said moulding surface.

4. A method according to claim 3, wherein the moulding surface has a plurality of apertures therein to constitute a mesh, the apertures communicating with said water-conducting channels.

5. A method according to claim 1, 2 or 3, wherein a mesh member is provided on said shaped member and, in use, water is drawn through the mesh to the shaped member.

6. A method according to claim 5, wherein the mesh member comprises wire mesh or a mesh made by stereolithography (SLA).

7. A method according to claim 3, wherein the size and/or disposition of the channels is such as to provide a pulp moulding of varying wall thickness but constant moulding density.

8. A mould for use in making a pulp moulding, which mould comprises a plastics member having a surface of a shape derived in the moulding; a plurality of fine apertures formed in the surface; and a series of water-flow channels formed in the plastics member communicating with the apertures to carry water therefrom.
